(19) Europäisches Patentamt

European Patent Office

Office européen des brevets

(11) **EP 1 268 208 B1**

(12) **EUROPÄISCHE PATENTSCHRIFT**

(45) Veröffentlichungstag und Bekanntmachung des Hinweises auf die Patenterteilung:
**24.03.2004 Patentblatt 2004/13**

(21) Anmeldenummer: **01942595.8**

(22) Anmeldetag: **10.01.2001**

(51) Int Cl.⁷: **B32B 27/36**, B32B 27/18,
C08L 67/02, C08K 5/00,
C08K 5/5317

(86) Internationale Anmeldenummer:
**PCT/EP2001/000201**

(87) Internationale Veröffentlichungsnummer:
**WO 2001/053082 (26.07.2001 Gazette 2001/30)**

(54) **TRANSPARENTE, FLAMMHEMMEND AUSGERÜSTETE, THERMOFORMBARE ORIENTIERTE FOLIE AUS KRISTALLISIERBAREN THERMOPLASTEN, VERFAHREN ZU IHRER HERSTELLUNG UND IHRE VERWENDUNG**

TRANSPARENT, FLAME RETARDANT, THERMOFORMABLE ORIENTED FILM MADE OF CRYSTALLISABLE THERMOPLASTIC MATERIALS, PRODUCTION METHOD AND USE THEREOF

FEUILLE ORIENTEE THERMOFORMABLE TRANSPARENTE, RETARDANT LA COMBUSTION, CONSTITUEE DE THERMOPLASTES CRISTALLISABLES, SON PROCEDE DE PRODUCTION ET SON UTILISATION

(84) Benannte Vertragsstaaten:
**DE FR GB IT LU NL**

(30) Priorität: **20.01.2000 DE 10002165**

(43) Veröffentlichungstag der Anmeldung:
**02.01.2003 Patentblatt 2003/01**

(73) Patentinhaber: **Mitsubishi Polyester Film GmbH**
**65203 Wiesbaden (DE)**

(72) Erfinder:
• **MURSCHALL, Ursula**
**55283 Nierstein (DE)**
• **KERN, Ulrich**
**55218 Ingelheim (DE)**
• **STOPP, Andreas**
**55218 Ingelheim (DE)**
• **CRASS, Günther**
**65232 Taunusstein (DE)**

(74) Vertreter: **Schweitzer, Klaus, Dr. et al**
**Patentanwaltskanzlei Zounek**
**Industriepark Kalle-Albert**
**Gebäude H391**
**Rheingaustrasse 190-196**
**65174 Wiesbaden (DE)**

(56) Entgegenhaltungen:
**EP-A- 0 306 675        EP-A- 0 785 067**
**GB-A- 2 344 596        US-A- 4 390 683**

## Beschreibung

Die Erfindung betrifft eine transparente, flammhemmend ausgerüstete, thermoformbare Folie aus kristallisierbaren Thermoplasten, deren Dicke bevorzugt im Bereich von 10 μm bis 350 μm liegt. Die Folie enthält mindestens ein Flammschutzmittel und zeichnet sich durch sehr gute optische und mechanische Eigenschaften sowie durch eine gute Verstreckbarkeit bzw. Thermoformbarkeit und eine wirtschaftliche Herstellung aus. Die Erfindung betrifft femer ein Verfahren zur Herstellung dieser Folie und ihre Verwendung.

Transparente Folie aus kristallisierbaren Thermoplasten mit einer Dicke zwischen 10 μm bis 350 μm sind hinreichend bekannt.

Diese Folien sind nicht flammhemmend ausgerüstet und nicht thermoformbar, so dass sich weder die Folien noch die daraus hergestellten Artikel bzw. Formkörper für Anwendungen eignen, wo Tiefziehfähigkeit und Brandschutz bzw. Schwerentflammbarkeit gefordert sind.

In der DE-A-23 46 787 ist ein schwerentflammbarer Rohstoff beschrieben, der phospholanmodifiziert ist. Neben dem Rohstoff ist auch die Verwendung des Rohstoffs zur Herstellung von Folien und Fasern beansprucht.

Beim Einsatz dieses phospholanmodifizierten Rohstoffs zur Folienherstellung zeigen sich folgende Defizite:

Der Rohstoff ist sehr hydrolyseempfindlich und muß sehr gut vorgetrocknet werden. Beim Trocknen des Rohstoffes mit Trocknern, die dem Stand der Technik entsprechen, verklebt der Rohstoff, so daß nur unter schwierigsten Bedingungen eine Folie herstellbar ist.

Die so unter unwirtschaftlichen Bedingungen hergestellten Folien verspröden bei Temperaturbelastungen, d. h. die mechanischen Eigenschaften gehen aufgrund der Versprödung stark zurück, so dass die Folie unbrauchbar ist. Bereits nach 48 Stunden Temperaturbelastung tritt diese Versprödung auf.

Aufgabe der vorliegenden Erfindung ist es, eine transparente, flammhemmend ausgerüstete, thermoformbare orientierte Folie mit einer Dicke von bevorzugt 10 - 350 μm bereitzustellen, die neben einer wirtschaftlichen Herstellung, einer guten Verstreckbarkeit, guten mechanischen sowie optischen Eigenschaften, vor allem thermoformbar ist und eine flammhemmende Wirkung und keine Versprödung nach Temperaturbelastung aufweist.

Thermoformbarkeit bedeutet, dass sich die Folie auf handelsüblichen Tiefziehmaschinen ohne unwirtschaftliches Vortrocknen zu komplexen und großflächigen Formkörpern tiefziehen bzw. thermoformen läßt.

Eine flammhemmende Wirkung bedeutet, dass die transparente Folie in einer sogenannten Brandschutzprüfung die Bedingungen nach DIN 4102 Teil 2 und insbesondere die Bedingungen nach DIN 4102 Teil 1 erfüllt und in die Baustoffklasse B 2 und insbesondere B1 der schwer entflamm baren Stoffe eingeordnet werden kann.

Desweiteren soll die Folie den UL-Test 94 (Vertical Burning Test for Flammability of Plastic Material) bestehen, so dass sie in die Klasse 94 VTM-0 eingestuft werden kann. Das bedeutet, dass die Folie 10 Sekunden nach Wegnahme des Bunsenbrenners nicht mehr brennt, nach 30 Sekunden kein Glühen beobachtet wird und auch kein Abtropfen festgestellt wird.

Zu den guten optischen Eigenschaften zählen beispielsweise eine hohe Lichttransmission (> 80%), ein hoher Oberflächenglanz (> 100), eine niedrige Trübung (< 20%) sowie eine niedrige Gelbzahl (YID < 10).

Zu den guten mechanischen Eigenschaften zählt unter anderem eine hoher E-Modul ($E_{MD}$ > 3200 N/mm$^2$; $E_{TD}$ > 3500 N/mm$^2$) sowie gute Reißfestigkeitswerte (in MD > 100 N/mm$^2$; in TD > 130 N/mm$^2$).

Zu der guten Verstreckbarkeit zählt, dass sich die Folie bei ihrer Herstellung sowohl in Längs- als auch in Querrichtung hervorragend und ohne Abrisse orientieren läßt.

Zu der wirtschaftlichen Herstellung zählt, dass die Rohstoffe bzw. die Rohstoffkomponenten, die zur Herstellung der schwer entflammbaren Folie benötigt werden, mit handelsüblichen Industrietrocknern, wie Vakuumtrockner, Wirbelschichttrockner, Fließbetttrockner oder Festbetttrockner (Schachttrockner), getrocknet werden können. Wesentlich ist, dass die Rohstoffe nicht verkleben und nicht thermisch abgebaut werden. Die genannten Trockner arbeiten bei Temperaturen zwischen 100 und 170°C, bei denen die erwähnten flammhemmend ausgerüsteten Rohstoffe verkleben und die Trockner bzw. Extruder so zusetzen, dass die verkohlte Masse herausgebrochen werden muß, so dass keine Folienherstellung möglich ist.

Bei dem am schonensten trocknenden Vakuumtrockner durchläuft der Rohstoff einen Temperaturbereich von ca. 30 °C bis 130 °C bei einem Vakuum von 50 mbar. Danach ist ein sog. Nachtrocknen in einem Hopper bei Temperaturen von 100 bis 130 °C und einer Verweilzeit von 3 bis 6 Stunden erforderlich. Selbst hier verkleben die nach dem Stand der Technik hergestellten flammhemmend ausgerüsteten Rohstoffe extrem.

Keine Versprödungen nach Temperaturbelastung bedeutet, dass die Folie nach 100 Stunden Tempervorgang bei 100 °C in einem Umluftofen keine Versprödung und keine nachteiligen mechanischen Eigenschaften aufweist.

Gelöst wird die erfindungsgemäße Aufgabe durch eine transparente orientierte Folie mit den Merkmalen des Anspruchs 1. Diese Folie ist mono oder biaxial orientiert.

Die transparente Folie enthält als Hauptbestandteil einen kristallisierbaren Thermoplasten. Erfindungsgemäß versteht man unter kristatfisierbaren Thermoplasten kristallisierbare Homopolymere, wie z.B. Polyester, Polyolefine, oder Polyamide; kristallisierbare Copolymere, wie z.B. Polyethylenterephthalat/isophthalat, Polyethylenterephthal/naphthalat; kristallisierbare Compounds; kristallisierbares Rezyklat und andere Variationen von kristallisierbaren Thermoplasten.

Erfindungsgemäß geeignete kristallisierbare bzw. teilkristalline Thermoplasten sind Polyester, wie z.B. Polyethylenterephthalat, Polybutylenterephthalat, Polyethylennaphthalat, wobei Polyethylenterephthalat (PET) besonders bevorzugt ist.

Es können auch Mischungen von kristallisierbaren Thermoplasten verwendet werden. Bevorzugt weisen diese Thermoplasten Kristallinitäten im Bereich von 5 bis 65 % auf.

Die erfindungsgemäße Folie kann sowohl einschichtig als auch mehrschichtig sein. Die transparente Folie kann ebenfalls mit diversen Copolyestern oder Haftvermittlern beschichtet sein.

Die Folie gemäß der Erfindung enthält mindestens ein Flammschutzmittel, das über die sogenannte Masterbatch-Technologie direkt bei der Folienherstellung zudosiert wird, wobei die Konzentration des Flammschutzmittels im Bereich von 0,5 bis 30,0 Gew.-%, vorzugsweise von 1,0 bis 20,0 Gew.-%, bezogen auf das Gewicht der Schicht des kristallisierbaren Thermoplasten, liegt. Bei der Herstellung des Masterbatchs wird im allgemeinen ein Verhältnis von Flammschutzmittel zu Thermoplast im Bereich von 60 zu 40 Gew.-% bis 10 zu 90 Gew.-% eingehalten.

Zu den typischen Flammschutzmitteln gehören Bromverbindungen, Chlorparaffine und andere Chlorverbindungen, Antimontrioxid, Aluminiumtrihydrate , wobei die Halogenverbindungen aufgrund der entstehenden halogenhaltigen Nebenprodukte nachteilig sind. Desweiteren ist die geringe Lichtbeständigkeit einer damit ausgerüsteten Folie neben der Entwicklung von Halogenwasserstoffen im Brandfall extrem nachteilig.

Geeignete Flammschutzmittein, die gemäß der Erfindung eingesetzt werden, sind beispielsweise organische Phosphorverbindungen wie Carboxyphosphinsäuren, deren Anhydride und Dimethyl-methylphosphonat. Erfindungswesentlich ist, dass die organische Phosphorverbindung im Thermoplast löslich ist, da andernfalls die geforderten optischen Eigenschaften nicht erfüllt werden.

Da die Flammschutzmittel im allgemeinen eine gewisse Hydrolyseempfindlichkeit aufweisen, kann der zusätzliche Einsatz eines Hydrolysestabilisators sinnvoll sein.

Als Hydrolysestabilisator werden im allgemeinen phenolische Stabilisatoren, Alkali/Erdalkalistearate und/oder Alkali-/Erdalkalicarbonate in Mengen von 0,01 bis 1,0 Gew.-% eingesetzt. Phenolische Stabilisatoren werden in einer Menge von 0,05 bis 0,6 Gew.-%, insbesondere 0,15 bis 0,3 Gew.-% und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

In einer bevorzugten Ausführungsform enthält die erfindungsgemäße, transparente, schwer entflammbare Folie als Hauptbestandteil ein kristallisierbares Polyethylenterephthalat, 1 Gew.-% bis 20 Gew.-% einer im Polyethylenterephthalat löslichen organischen Phosphorverbindung als Flammschutzmittel und 0,1 Gew.-% bis 1,0 Gew.-% eines Hydrolysestabilisators.

Diese Angabe bzgl. Flammschutzmittel und Hydrolysestabilisator gilt auch in Hinblick auf andere erfindungsgemäß zu verwendende Thermoplasten.

Erfindungswesentlich ist, dass der kristallisierbare Thermoplast einen Diethylenglykolgehalt (DEG-Gehalt) von ≥ 1,0 Gew.%, vorzugsweise ≥1,2 Gew.%, insbesondere ≥ 1,3 Gew.% und/oder ein Polyethylenglykolgehalt (PEG-Gehalt) von ≥ 1,0 Gew.%, vorzugsweise ≥ 1,2 Gew.%, insbesondere ≥1,3 Gew.% und/oder ein Isophthalsäuregehalt (IPA) von 3 Gew.-% bis 10 Gew.-% aufweist.

Es war mehr als überraschend, dass sich die Folien durch ein im Vergleich zum Standardthermoplasten höheren Diethylenglykolgehalt und/oder Polyethylenglykolgehalt und/oder IPA-Gehalt wirtschaftlich auf handelsüblichen Tiefziehanlagen thermoformen lassen und eine hervorragende Detailwiedergabe liefern.

Der Oberflächenglanz der erfindungsgemäßen Folien, gemessen nach DIN 67530 (Messwinkel 20 °) ist größer als 100, vorzugsweise größer als 120, die Lichttransmission L, gemessen nach ASTM D 1003, beträgt mehr als 80%, vorzugsweise mehr als 84% und die Trübung der Folie, gemessen nach ASTM D 1003, beträgt weniger als 20% , vorzugsweise weniger als 15%, welches für die erzielten Flammhemmung überraschend gut ist.

Die Standardviskosität SV (DCE) des Polyethylenterephthalates, gemessen in Dichloressigsäure nach DIN 53728, liegt bevorzugt zwischen 600 und 1000, vorzugsweise zwischen 700 und 900. Der Kristallitschmelzpunkt, gemessen durch DSC mit einer Aufheizgeschwindigkeit von 10 °C/min, liegt bevorzugt im Bereich von 220 - 280 °C.

Es ist dabei überraschend, dass sich orientierte PET-Folien durch einen im Vergleich zum Standardpolyester erhöheren Diethylenglykolgehalt und/oder Polyethylenglykolgehalt thermoformen lassen.

Der Thermoformprozess umfaßt in der Regel die Schritte Vortrocknen, Aufheizen, Formen, Abkühlen, Entformen, Tempern. Beim Thermoformprozess wurde festgestellt, dass sich die erfindungsgemäßen Folien ohne vorheriges Vortrocknen überraschenderweise tiefziehen lassen. Dieser Vorteil im Vergleich zu tiefziehfähigen Polycarbonat- oder Polymethacrylat-Folien, bei denen je nach Dicke Vortrocknungszeiten von 10 - 15 Stunden, bei Temperaturen von 100 °C bis 120 °C erforderlich sind, reduziert drastisch die Kosten des Umformprozesses.

Die erfindungsgemäße Folie, bevorzugt PET-Folie, die mindestens ein Flammschutzmittel enthält, kann sowohl einschichtig als auch mehrschichtig sein.

In der mehrschichtigen Ausführungsform ist die Folie aus mindestes einer Kemschicht und mindestens einer Deckschicht aufgebaut, wobei insbesondere ein dreischichtiger A-B-A oder A-B-C Aufbau bevorzugt ist. Die Schichtdicken der Deckschichten betragen bevorzugt 0,5 - 2 μm.

Für diese Ausführungsform ist es wesentlich, dass das Polyethylenterephthalat der Kemschicht eine ähnliche Standardviskosität und einen ähnlichen DEG-Gehalt und/oder PEG-Gehalt besitzt, wie das Polyethylenterephthalat der Deckschicht (en), die an die Kemschicht angrenzt (angrenzen).

In einer besonderen Ausführungsform können die Deckschichten auch aus einem Polyethylennaphthalat - Homopolymeren oder aus Polyethylentheraphtalat-Polyethylennaphthalat Copolymeren oder Compound bestehen.

In dieser Ausführungsform haben die Thermoplaste der Deckschichten ebenfalls ähnliche Standardviskositäten wie das Polyethylentherephthalat der Kemschicht.

In der mehrschichtigen Ausführungsform ist der Flammschutz vorzugsweise in der bzw. den Deckschichten enthalten. Jedoch kann nach Bedarf auch die Kemschicht mit Flammschutzmittel ausgerüstet sein.

Anders als in der einschichtigen Ausführungsform bezieht sich hier die Konzentration des Flammschutzmittels auf das Gewicht der Thermoplasten in der ausgerüsteten Schicht. Die Konzentrationsbereiche sind identisch mit denen in der Basisschicht.

Ganz überraschend haben Brandschutzversuche nach DIN 4102 und dem UL-Test gezeigt, dass es im Falle einer dreischichtigen Folie durchaus ausreichend ist, die 0,5 bis 2 μm dicken Deckschichten mit Flammschutzmittel auszurüsten, um eine verbesserte Flammhemmung zu erreichen. Bei Bedarf und bei hohen Brandschutzanforderungen kann auch die Kemschicht mit Flammschutzmittel ausgerüstet sein, d. h. eine sogenannte Grundausrüstung beinhalten.

Dadurch werden die mit der bekannten Koextrusionstechnologie hergestellten schwer entflammbaren, thermoformbaren, mehrschichtigen Folien im Vergleich zu den komplett in hohen Konzentrationen ausgerüsteten Monofolien wirtschaftlich interessant, da deutlich weniger Flammschutzmittel benötigt wird.

Die Folie kann auch mindestens einseitig mit einer kratzfesten Beschichtung, mit einem Copolyester oder mit einem Haftvermittler versehen sein.

Bei der Herstellung der erfindungsgemäßen Folie wurde ferner festgestellt, dass sich mittels Masterbatch-Technologie, einer geeigneten Vortrocknung bzw. Vorkristallisation des Masterbatches und gegebenenfalls durch Einsatz von geringen Konzentrationen an Hydrolysestabilisator die schwerentflammbare tiefziehfähige Folie ohne Verklebung im Trockner herstellen läßt. Desweiteren wurden keine Ausgasungen und Ablagerungen im Produktionsprozess gefunden.

Darüber hinaus ergaben Messungen, dass die erfindungsgemäße Folie bei Temperaturbelastungen von 100 °C über einen längeren Zeitraum nicht versprödet. Dieses Resultat wird auf die synergistische Wirkung von geeigneter Vorkristallisation, Vortrocknung, Masterbatch-Technologie und Hydrolysestabilisator zurückgeführt.

Daher ist die erfindungsgemäße Folie bzw. der Formkörper ohne Umweltbelastung und ohne Verlust der mechanischen Eigenschaften problemlos rezyklierbar, wodurch sie sich beispielsweise für die Verwendung als kurzlebige Werbeschilder, beim Messebau und für andere Werbeartikel, wo Brandschutz und Thermoformbarkeit gewünscht wird eignet.

Darüberhinaus läßt sich die Folie auch ohne Vortrocknen thermoformen, so dass komplexe Formkörper daraus hergestellt werden können.

Für das Thermoformen wurden beispielsweise folgende Verfahrensparameter gefunden:

| Verfahrensschritt | Erfindungsgemäße Folie |
| --- | --- |
| Vortrocknen | Nicht erforderlich |
| Temperatur der Form °C | 100 - 160 |
| Aufheizzeit | < 5 sec pro 10 μm Dicke |
| Folientemperatur beim Verformen °C | 160 - 200 |
| Möglicher Verstreckfaktor | 1,5 -2,0 |
| Detailwiedergabe | Gut |
| Schrumpf (Schwindung) % | < 1,5 |

Überraschenderweise erfüllen schon erfindungsgemäße Folien im Dickenbereich 10 - 350 μm die Anforderungen der Baustoffklassen B2 und B1 nach DIN 4102 und des UL-Test 94.

Die Herstellung einer erfindungsgemäßen Folie kann beispielsweise nach dem Extrusionsverfahren in einer Extrusionsstraße erfolgen.

Erfindungsgemäß wird das Flammschutzmittel über die Masterbatch-Technologie zugegeben. Das Flammschutzmittel wird in einem Trägermaterial dispergiert. Als Trägermaterial kommen der Thermoplast selbst, wie z.B. das Polyethylenterephthalat oder auch andere Polymere, die mit dem Thermoplasten verträglich sind, in Frage.

Der DEG-Gehalt und/oder PEG-Gehalt des Polyethylenterephthalates werden zweckmäßigerweise beim Rohstoffhersteller während des Polymerisationsprozesses eingestellt.

Wichtig bei der Masterbatch-Technologie ist, dass die Komgröße und das Schüttgewicht des Masterbatches ähnlich der Komgröße und dem Schüttgewicht des Thermoplasten ist, so dass eine homogene Verteilung und damit eine homogene Schwerentflammbarkeit erfolgen kann.

Die erfindungsgemäßen Folien können nach bekannten Verfahren z.B. aus einem Polyesterrohstoff mit ggf. weiteren Rohstoffen und dem Flammschutzmittel und/oder weiteren üblichen Additiven (wie z.B. Antiblockmitteln, Gleitmitteln etc.) in üblicher Menge von 0,1 bis max. 30 Gew.-% sowohl als Monofolie als auch als mehrschichtige, ggf. koextrudierte Folien mit gleichen oder unterschiedlich ausgebildeten Oberflächen hergestellt werden; wobei eine Oberfläche beispielsweise pigmentiert ist und die andere Oberfläche kein Pigment enthält. Ebenso können eine oder beide Oberflächen der Folie nach bekannten Verfahren mit einer üblichen funktionalen Beschichtung versehen werden.

Daher war es mehr als überraschend, dass mittels Masterbatch-Technologie, einer geeigneten Vortrocknung und/oder Vorkristallisation und gegebenenfalls Einsatz von geringen Mengen eines Hydrolysestabilisators eine schwerentflammbare und thermoformbare Folie mit dem geforderten Eigenschaftsprofil wirtschaftlich und ohne Verklebung im Trockner herstellbar ist und dass die Folie nach Temperaturbelastung nicht versprödet und beim Knicken nicht bricht.

Weiterhin überraschend war, dass

- der Gelbwert der Folie im Vergleich zu einer nicht ausgerüsteten Folie im Rahmen der Meßgenauigkeit nicht negativ beeinflusst ist;
- bei der Folienherstellung keine Ausgasungen, keine Düsenablagerungen, keine Rahmenausdampfungen auftreten, wodurch die Folie eine exzellente Optik aufweist und ein ausgezeichnetes Profil und eine hervorragende Planlage hat;
- sich die schwerentflammbare Folie durch einen hervorragende Streckbarkeit auszeichnet, so dass sie verfahrenssicher und stabil auf high speed film lines bis zu Geschwindigkeiten von 420m/min produktionssicher hergestellt werden kann.

Damit ist eine solche Folie auch wirtschaftlich rentabel.

Desweiteren ist sehr überraschend, dass auch das aus den Folien bzw. den Formkörpern erzeugte Rezyklat wieder einsetzbar ist, ohne den Gelbwert der Folie negativ zu beeinflussen.

Durch die überraschende Kombination ausgezeichneter Eigenschaften eignen sich die erfindungsgemäße Folie und daraus hergestellte Formkörper hervorragend für eine Vielzahl verschiedener Anwendungen, beispielsweise für Innenraumverkleidungen, für Messebau und Messeartikel, als Displays, für Schilder, für Schutzverglasungen von Maschinen und Fahrzeugen, im Beleuchtungssektor, im Laden- und Regalbau, als Werbeartikel, Kaschiermedium, für Gewächshäuser, Überdachungen, Außenverkleidungen, Abdeckungen, Anwendungen im Bausektor und Lichtwerbeprofile, Schattenmatten, Elektroanwendungen.

Aufgrund der Thermoformbarkeit eignet sich die erfindungsgemäße Folie zum Thermoformen beliebiger Formkörper für Innen- und Außenanwendungen:

Die Erfindung wird im folgenden anhand von Ausführungsbeispielen näher erläutert.

Die Messungen der einzelnen Eigenschaften erfolgt dabei gemäß der folgenden Normen bzw. Verfahren.

### Meßmethoden

DIN = Deutsches Institut für Normung
ISO = International Organization for Standardization

### DEG-Gehalt/PEG-Gehalt/IPA-Gehalt

Der DEG-/PEG-/IPA-Gehalt wird gaschromatografisch nach Verseifung in methanolischer KOH und Neutralisation mit wässrigem HCl bestimmt.

### Oberflächenglanz

Der Oberflächenglanz wir bei einem Messwinkel von 20° nach DIN 67530 gemessen.

**Lichttransmission**

Unter der Lichttransmission ist das Verhältnis des insgesamt durchgelassenen Lichtes zur einfallenden Lichtmenge zu verstehen.

Die Lichttransmission wird mit dem Messgerät "® HAZEGARD plus" nach ASTM D 1003 gemessen.

**Trübung**

Trübung ist der prozentuale Anteil des durchgelassenen Lichtes, der vom eingestrahlten Lichtbündel im Mittel um mehr als 2,5° abweicht. Die Bildschärfe wird unter einem Winkel kleiner 2,5° ermittelt.
Die Trübung wird mit dem Messgerät "HAZEGARD plus" nach ASTM D 1003

**Oberflächendefekte**

Die Oberflächendefekte werden visuell bestimmt.

**Mechanische Eigenschaften**

Der E-Modul und die Reißfestigkeit werden in Längs- und Querrichtung nach ISO 527-1-2 gemessen.

**SV (DCE), IV (DVE)**

Die Standardviskosität SV (DCE) wird angelehnt an DIN 53726 in Dichloressigsäure gemessen.
Die intrinsische Viskosität (IV) berechnet sich wie folgt aus der Standardviskosität

$$IV\ (DCE) = 6,67 \cdot 10^{-4} SV \cdot (DCE) + 0,118$$

**Brandverhalten**

Das Brandverhalten wird nach DIN 4102 Teil 2, Baustoffklasse B2 und nach DIN 4102 Teil 1, Baustoffklasse B1 sowie nach dem UL-Test 94 ermittelt.

**Beispiele**

**Beispiel 1**

Es wird eine 50 μm dicke, transparente Folie hergestellt, die als Hauptbestandteil Polyethylenterephthalat, 0,2 Gew.-% Sylobloc® als Antiblockmittel, 0,2 Gew.-% Hydrolysestabilisator und 4 Gew.-% Flammschutzmittel enthält.

Zwecks homogener Verteilung wird das Sylobloc, das im PET nicht löslich ist, beim Rohstoffhersteller in das Polyethyienterephthalat eingearbeitet.

Das Polyethylenterephthalat, aus dem die transparente Folie hergestellt wird, hat eine Standardviskosität SV (DCE) von 810, was einer intrinsischen Viskosität IV (DCE) von 0,658 dl/g entspricht und einen DEG-Gehalt von 1,6 Gew.% und einen PEG-Gehalt von 1,7 Gew.%.

Der Hydrolysestabilisator und das Flammschutzmittel werden in Form eines Masterbatches zudosiert. Das Masterbatch setzt sich aus 20 Gew.-% Flammschutzmittel, 1 Gew.-% Hydrolysestabilisator und 79 Gew.-% Polyethylenterephthalat zusammen.

Bei dem Hydrolysestabilisator handelt es sich um Pentaerylthrityl-Tetrakis-3-(3,5-di-Tertiärbutyl-4-Hydroxylphenyl)-Propionat.

Bei dem Flammschutzmittel handelt es sich um die im PET gelöste organische Phosphorverbindung® Amgard P1045 der Fa. Albright & Wilson.

Das Masterbatch hat ein Schüttgewicht von 750 kg/m$^2$ und einen Erweichungspunkt von 69 °C.

50 Gew.-% des Polyethylenterephthalates, 30 Gew.-% Polyethylenterephthalat-Rezyklat und 20 Gew.-% des Masterbatches werden bei Raumtemperatur aus separaten Dosierbehältern in einen Vakuumtrockner gefüllt, der von dem Einfüllzeitpunkt bis zum Ende der Verweilzeit ein Temperaturspektrum von 25 °C bis 130 °C durchläuft. Während der ca. 4-stündigen Verweilzeit wird das Rohstoffgemisch mit 61 Upm gerührt.

Das vorkristallisierte bzw. vorgetrocknete Rohstoffgemisch wird in dem nachgeschalteten, ebenfalls unter Vakuum stehenden Hopper bei 140 °C 4 Stunden nachgetrocknet. Anschließend wird mit dem beschriebenen Extrusi-

onsverfahren die 50 μm Monofolie hergestellt.

Die hergestellte transparente PET-Folie hat folgendes Eigenschaftsprofil:

| | |
|---|---|
| Dicke | 50 μm |
| Oberflächenglanz 1. Seite | 155 |
| (Messwinkel 20 °) 2. Seite | 152 |
| Lichttransmission | 91 % |
| Trübung | 4,0 % |
| Oberflächendefekte pro m$^2$ | keine |
| E-Modul längs | 3600N/mm$^2$ |
| E-Modul quer | 4700 N/mm$^2$ |
| Reissfestigkeit längs | 110 N/mm$^2$ |
| Reissfestigkeit quer | 180 N/mm$^2$ |
| Gelbzahl (YID) | 3,1 |

Nach 200 Stunden tempern bei 100 °C im Umlufttrocknerschrank sind die mechanischen Eigenschaften unverändert. Die Folie zeigt keinerlei Versprödungserscheinungen.

Die Folie erfüllt nach DIN 4102 Teil 2 / Teil 1 die Anforderungen der Baustoffklassen B2 und B1. Die Folie besteht den UL-Test 94.

**Beispiel 2**

Nach der Koextrusionstechnologie wird eine 17 μm dicke mehrschichtige PET-Folie mit der Schichtreihenfolge A-B-A hergestellt, wobei B die Kemschicht und A die Deckschichten repräsentieren. Die Kernschicht ist 15 μm dick und die beiden Deckschichten, die die Kemschicht überziehen, sind jeweils 1 μm dick.

Das für die Kemschicht B eingesetzte Polyethylenterephthalat ist identisch mit dem aus Beispiel 1, enthält aber kein Sylobloc®. Die Kemschicht enthält 0,2 Gew.-% Hydrolysestabilisator und 5 Gew.-% Flammschutzmittel. Der Hydrolysestabilisator und das Flammschutzmittel werden wie in Beispiel 1 in Form eines Masterbatches zudosiert. Das Masterbatch setzt sich aus 25 Gew.-% Flammschutzmittel, 1 Gew-% Hydrolysestabilisator und 74 Gew.-% Polyethylenterephthalat zusammen. Der Hydrolysestabilisatorund das Flammschutzmittel sind identisch mit denen aus Beispiel 1.

Das Polyethylenterephthalat der Deckschicht A ist identisch mit Polyethylenterephthalat aus Beispiel 1, d. h. der Deckschichtrohstoff ist mit 0,3 Gew.-% Sylobloc ausgerüstet. Die Deckschichten enthalten keinen Hydrolysestabilisator und kein Flammschutzmittel.

Für die Kemschicht werden 50 Gew.-% Polyethylenterephthalat, 30 Gew.-% Polyethylenterephthalat-Rezyklat und 20 Gew-% des beschriebenen Masterbatches entsprechend Beispiel 1 vorkristallisiert, vorgetrocknet und nachgetrocknet.

Der Deckschichtrohstoff erfährt keine besondere Trocknung. Mittels Koextrusionstechnologie wird eine 17 μm dicke Folie mit der Schichtreihenfolge A-B-A hergestellt, die folgende Eigenschaften zeigt:

| | |
|---|---|
| Schichtaufbau | A-B-A |
| Gesamtdicke | 17 μm |
| Oberflächenglanz 1. Seite | 174 |
| (Messwinkel 20 °) 2. Seite | 169 |
| Lichttransmission | 94,2 % |
| Trübung | 2,1 % |
| Oberflächendefekte pro m$^2$ | keine |
| E-Modul längs | 3400 N/mm$^2$ |
| E-Modul quer | 4150 N/mm$^2$ |
| Reissfestigkeit längs | 125 N/mm$^2$ |
| Reissfestigkeit quer | 160 N/mm$^2$ |
| Gelbzahl (YID) | 2,9 |

Nach 200 Stunden Tempem bei 100 °C im Umlufttrocknerschrank sind die mechanischen Eigenschaften unverändert. Die Folie zeigt keinerlei Versprödungserscheinungen.

Die Folie erfüllt nach DIN 4102 Teil 2 und Teil 1 die Anforderungen der Baustoffklasse B2 und B1. Die Folie besteht den UL-Test 94.

**Beispiel 3**

Entsprechend Beispiel 2 wird eine 20 μm A-B-A-Folie hergestellt, wobei die Kernschicht B 16 μm und die Deckschichten A jeweils 2 μm dick sind.

Die Kemschicht B enthält nur 5 Gew.-% des Masterbatches aus Beispiel 2.

Die Deckschichten sind identisch mit denen aus Beispiel 2, enthalten aber 20 Gew.-% des Masterbatches, welches in Beispiel 2 nur für die Kemschicht eingesetzt wurde.

Die Rohstoffe und das Masterbatch für die Kernschicht und die Deckschichten werden entsprechend Beispiel 1 vorkristallisiert, vorgetrocknet und nachgetrocknet.

Die mittels Koextrusionstechnologie hergestellt, mehrschichtige 20 μm Folie hat folgendes Eigenschaftsprofil:

| | |
|---|---|
| Schichtaufbau | A-B-A |
| Gesamtdicke | 20 μm |
| Oberflächenglanz 1. Seite | 170 |
| (Messwinkel 20 °) 2. Seite | 166 |
| Lichttransmission | 92,0 % |
| Trübung | 2,7 % |
| Oberflächendefekte | keine |
| E-Modul längs | 3500 N/mm$^2$ |
| E-Modul quer | 4100 N/mm$^2$ |
| Reissfestigkeit längs | 120 N/mm$^2$ |
| Reissfestigkeit quer | 155 N/mm$^2$ |
| Gelbzahl (YID) | 2,9 |

Nach 200 Stunden Tempem bei 100 °C im Umlufttrocknerschrank sind die mechanischen Eigenschaften unverändert. Die Folie zeigt keinerlei Versprödungserscheinungen.

Die Folie erfüllt nach DIN 4102 Teil 2 und Teil 1 die Anforderungen der Baustoffklassen B2 und B1. Die Folie besteht den UL-Test 94.

**Thermoformbarkeit**

Die Folien aus den Beispielen 1 bis 3 lassen sich auf handelsüblichen Tiefziehmaschinen, z.B. von Fa. Illig, ohne Vortrocknung zu Formkörpem thermoformen. Die Detailwiedergabe der Formkörper ist bei einer homogenen Oberfläche hervorragend.

**Vergleichsbeispiel 1**

Beispiel 1 wird wiederholt. Die Folie wird aber nicht mit Masterbatch ausgerüstet, d. h. die Folie enthält keinen Hydrolysestabilisator und kein Flammschutzmittel. Das eingesetzte PET hat einen üblichen DEG-Gehalt von 0,6 Gew. % und enthält kein PEG.

Die hergestellte transparente PET-Folie hat folgendes Eigenschaftsprofil:

| | |
|---|---|
| Dicke | 50 μm |
| Oberflächenglanz 1. Seite | 160 |
| (Messwinkel 20 °) 2. Seite | 155 |
| Lichttransmission | 92 % |
| Trübung | 3,9 % |
| Oberflächendefekte pro m$^2$ | keine |
| E-Modul längs | 4300N/mm$^2$ |
| E-Modul quer | 5800 N/mm$^2$ |
| Reissfestigkeit längs | 180 N/mm$^2$ |
| Reissfestigkeit quer | 240 N/mm$^2$ |

(fortgesetzt)

| Gelbzahl (YID) | 3,0 |
|---|---|

Die unausgerüstete Folie erfüllt die Tests nach DIN 4102 Teil 1 und Teil 2 sowie den UL-Test 94 nicht.

Die Folie ist unzureichend thermoformbar.

**Patentansprüche**

1. Transparente, thermoformbare, orientierte Folie enthaltend einen kristallisierbaren Polyester oder eine Mischung verschiedener kristallisierbarer Polyester mit einem Diethylenglykol- und/oder einem Polyethylenglykolgehalt von ≥ 1 Gew.-% und/oder einem Isophthalsäuregehalt von 3 bis 10 Gew.-% und mindestens ein Flammschutzmittel, das eine in dem kristallisierbaren Polyester lösliche, organische Phosphorverbindung enthält.

2. Folie gemäß Anspruch 1, **dadurch gekennzeichnet, daß** der Polyester eine Kristallinität im Bereich von 5 - 65 % aufweist.

3. Folie gemäß einem oder mehreren der Ansprüche 1 bis 2, **dadurch gekennzeichnet, daß** als Polyester Polyethylenterephthalat, Polybutylenterephthalat oder Polyethylennaphthalat verwendet wird.

4. Folie gemäß einem oder mehreren der Ansprüche 1 bis 3, **dadurch gekennzeichnet, daß** als Polyester Polyethylenterephthalat verwendet wird.

5. Folie gemäß Anspruch 3 oder 4, **dadurch gekennzeichnet, daß** das Polyethylenterephthalat einen Diethylenglykolgehalt und/oder einen Polyethylenglykolgehalt von größer 1,3 Gew.-%, bevorzugt von 1,6-5 Gew.-%, aufweist.

6. Folie gemäß einem oder mehreren der Ansprüche 3 bis 5, **dadurch gekennzeichnet, daß** das Polyethylenterephthalat eine Standardviskosität SV (DCE) von 600 - 1000 aufweist.

7. Folie gemäß einem oder mehreren der Ansprüche 1 bis 6, **dadurch gekennzeichnet, daß** als Flammschutzmittel Mischungen von organischen Phosphorverbindungen verwendet werden.

8. Folie gemäß einem oder mehreren der Ansprüche 1 bis 7, **dadurch gekennzeichnet, daß** die Konzentration des Flammschutzmittels oder der Flammschutzmittel 0,5 - 30 Gew.-%, bevorzugt 1 - 20 Gew.-%, bezogen auf das Gewicht der Schicht des kristallisierbaren Polyesters oder der kristallisierbaren Polyester, beträgt.

9. Folie gemäß einem oder mehreren der Ansprüche 1 bis 8, **dadurch gekennzeichnet, daß** sie einen Hydrolysestabilisator, bevorzugt 0,1 - 1 Gew.-% bezogen auf das Gewicht der Schicht des kristallisierbaren Polyesters oder der kristallisierbaren polyester, enthält.

10. Folie gemäß Anspruch 9, **dadurch gekennzeichnet, daß** als Hydrolysestabilisator Pentaerythrityl-tetrakis-3-(3,5-di-tertiärbutyl-4-hydroxyphenyl)-propionat oder 1,3,5-Trimethyl-2,4,6-tris(3,5-di-tertiärbutyl-4-hydroxybenzyl)-benzol verwendet wird.

11. Folie gemäß einem oder mehreren der Ansprüche 1 bis 10, **dadurch gekennzeichnet, daß** sie mehrschichtig ist.

12. Folie gemäß Anspruch 11, **dadurch gekennzeichnet, daß** das Flammschutzmittel in der Deckschicht oder den Deckschichten enthalten ist.

13. Folie gemäß einem oder mehreren der Ansprüche 1 bis 12, **dadurch gekennzeichnet, daß** sie eine Dicke von 1 - 350 μm aufweist.

14. Folie gemäß einem oder mehreren der Ansprüche 1 bis 13, **dadurch gekennzeichnet, daß** diese biaxial orientiert ist.

15. Verfahren zur Herstellung einer Folie gemäß einem oder mehreren der Ansprüche 1 bis 14, **dadurch gekennzeichnet, daß** man einen kristallisierbaren Polyester oder eine Mischung aus kristallisierbaren Polyestern in einem Extruder zusammen mit mindestens einem Flammschutzmittel und gegebenenfalls einem Hydrolysestabilisator aufschmilzt, extrudiert, orientiert und fixiert.

16. Verfahren gemäß Anspruch 15 **dadurch gekennzeichnet, daß** Flammschutzmittel und gegebenenfalls der Hydrolysestabilisator mittels der Masterbatch-Technologie zugesetzt werden.

17. Verwendung einer Folie gemäß einem oder mehreren der Ansprüche 1 bis 14 zur Herstellung von Formkörpern.

18. Formkörper hergestellt durch Tiefziehen einer Folie gemäß einem oder mehreren der Ansprüche 1 bis 14.

**Claims**

1. A transparent, thermoformable, oriented film comprising a crystallizable polyester or a mixture of different crystallizable polyesters having a diethylene glycol content and/or a polyethylene glycol content of $\geq$ 1% by weight and/or an isophthalic acid content of 3 to 10% by weight, and at least one flame retardant which comprises an organic phosphorus compound which is soluble in the crystallizable polyester.

2. The film as claimed in claim 1, wherein the polyester has a crystallinity of from 5 to 65%.

3. The film as claimed in one or both of claims 1 and 2, wherein the polyester used comprises polyethylene terephthalate, polybutylene terephthalate or polyethylene naphthalate.

4. The film as claimed in one or more of claims 1 to 3, wherein the polyester used comprises polyethylene terephthalate.

5. The film as claimed in claim 3 or 4, wherein the polyethylene terephthalate has a diethylene glycol content and/or a polyethylene glycol content of more than 1.3% by weight, preferably from 1.6 to 5% by weight.

6. The film as claimed in one or more of claims 3 to 5, wherein the polyethylene terephthalate has a standard viscosity SC (DCA) of from 600 to 1000.

7. The film as claimed in one or more of claims 1 to 6, wherein the flame retardants used comprise mixtures of organic phosphorus compounds.

8. The film as claimed in one or more of claims 1 to 7, wherein the concentration of the flame retardant(s) is from 0.5 to 30% by weight, preferably from 1 to 20% by weight, based on the weight of the layer of the crystallizable polyester(s).

9. The film as claimed in one or more of claims 1 to 8, wherein the film comprises preferably from 0.1 to 1% by weight of a hydrolysis stabilizer, based on the weight of the layer of the crystallizable polyester(s).

10. The film as claimed in claim 9, wherein the hydrolysis stabilizer used is pentaerythrityl tetrakis-3-(3,5-di-tert-butyl-4-hydroxyphenyl)propionate or 2,3,5-trimethyl-2,4,6-tris(3,5-di-tert-butyl-4-hydroxybenzyl)benzene.

11. The film as claimed in one or more of claims 1 to 10, wherein the film has two or more layers.

12. The film as claimed in claim 11, wherein the flame retardant is present in the outer layer(s).

13. The film as claimed in one or more of claims 1 to 12, wherein the film has a thickness of from 1 to 350 µm.

14. The film as claimed in one or more of claims 1 to 13, wherein the film has been biaxially oriented.

15. A process for producing a film as claimed in one or more of claims 1 to 14, which comprises melting, extruding, orienting and setting a crystallizable polyester or a mixture made from crystallizable polyesters in an extruder, together with at least one flame retardant and, if appropriate, a hydrolysis stabilizer.

16. The process as claimed in claim 15, wherein flame retardant and, if appropriate, the hydrolysis stabilizer are added by way of masterbatch technology.

**17.** The use of a film as claimed in one or more of claims 1 to 14 for producing moldings.

**18.** A molding produced by deep-drawing a film as claimed in one or more of claims 1 to 14.

## Revendications

**1.** Feuille thermoformable, orientée, transparente comprenant un polyester cristallisable ou un mélange de différents polyesters cristallisables avec une teneur en diéthylèneglycol et/ou une teneur en polyéthylène glycol supérieure ou égale à 1 % en poids et/ou une teneur en acide isophtalique de 3 % à 10 % en poids, et au moins un produit ignifugeant, qui comprend un composé phosphoré organique soluble dans le polyester cristallisable.

**2.** Feuille selon la revendication 1, **caractérisée en ce que** le polyester présente une cristallinité dans la gamme allant de 5 à 65 %.

**3.** Feuille selon l'une quelconque ou plusieurs des revendications 1 à 2, **caractérisée en ce que** du polyéthylènetéréphtalate, du polybutylènetéréphtalate ou du polyéthylènenaphtalate est utilisé à titre de polyester.

**4.** Feuille selon l'une quelconque ou plusieurs des revendications 1 à 3, **caractérisée en ce que** du polyéthylènetéréphtalate est utilisé à titre de polyester.

**5.** Feuille selon la revendication 3 ou 4, **caractérisée en ce que** le polyéthylènetéréphtalate présente une teneur en diéthylèneglycol et/ou une teneur en polyéthylène glycol de plus de 1,3 % en poids, et de préférence de 1,6 à 5 % en poids.

**6.** Feuille selon l'une quelconque ou plusieurs des revendications 3 à 5, **caractérisée en ce que** le polyéthylènetéréphtalate présente une viscosité standard SV (DCE) de 500 à 1000.

**7.** Feuille selon l'une quelconque ou plusieurs des revendications 1 à 6, **caractérisée en ce que** des mélanges de composés organiques du phosphore sont utilisés à titre de produit ignifugeant.

**8.** Feuille selon l'une quelconque ou plusieurs des revendications 1 à 7, **caractérisée en ce que** la concentration du produit ignifugeant ou des produits ignifugeants s'élève à une quantité de 0,5 à 30 % en poids, de préférence de 1 à 20 % en poids, par rapport au poids de la couche du polyester cristallisable ou des polyesters cristallisables.

**9.** Feuille de selon l'une quelconque ou plusieurs des revendications 1 à 8, **caractérisée en ce qu'**elle contient un stabilisant d'hydrolyse, de préférence de 0,1 à 1 %, par rapport au poids de la couche du polyester cristallisable ou des polyesters cristallisables.

**10.** Feuille selon la revendication 9, **caractérisée en ce que** du pentaérythrityl-tétrakis-3-(3,5-di-tert-butyl-4-hydroxyphényl)-propionate ou du 1,3,5-triméthyl-2,4,6-tris(3,5-di-tert-butyl-4-hydroxybenzyl)-benzène est utilisé en tant que stabilisant d'hydrolyse.

**11.** Feuille selon l'une quelconque ou plusieurs des revendications 1 à 10, **caractérisée en ce qu'**elle est constituée de plusieurs couches.

**12.** Feuille selon la revendication 11, **caractérisée en ce que** le produit ignifugeant est contenu dans la couche de surface ou les couches de surface.

**13.** Feuille selon l'une quelconque ou plusieurs des revendications 1 à 12, **caractérisée en ce qu'**elle présente une épaisseur de 1 à 350 μm.

**14.** Feuille selon l'une quelconque ou plusieurs des revendications 1 à 13, **caractérisée en ce qu'**elle est orientée biaxialement.

**15.** Procédé pour fabriquer une feuille selon l'une quelconque ou plusieurs des revendications 1 à 14, **caractérisé en**

**ce que** l'on fait fondre, extrude, oriente et traite par thermofixation un polyester cristallisable, ou un mélange de polyesters cristallisables dans une extrudeuse avec au moins un produit ignifugeant et éventuellement un stabilisant d'hydrolyse.

16. Procédé selon la revendication 15, **caractérisé en ce que** le produit ignifugeant et le stabilisant d'hydrolyse éventuellement sont ajoutés selon la technologie mélange-maître.

17. Utilisation d'une feuille selon l'une quelconque ou plusieurs des revendications 1 à 14 pour la fabrication d'un corps moulé.

18. Corps moulé fabriqué par emboutissage d'une feuille selon l'une quelconque ou plusieurs des revendications de 1 à 14.